# EUROPEAN PATENT APPLICATION

(11) **EP 4 644 279 A2**
(43) Date of publication of application: **05.11.2025**
(21) Application number: 25164188.2
(22) Date of filing: 17.03.2025
(51) Int. Cl.: B65B 23/14, B65B 23/16, B65B 35/36, B65G 47/90

(54) **A GRIPPER FOR A HANDLING DEVICE**

(30) Priority: 15.03.2024 NL 2037259
(71) Applicant: Royal Houdijk B.V., 3133 KS Vlaardingen (NL)
(72) Inventor: BUITENHUIS, Menze Jan, 3133KS VLAARDINGEN (NL); HOUDIJK, Laurens, 3133KS VLAARDINGEN (NL)
(74) Representative: Algemeen Octrooi- en Merkenbureau B.V.

(57) **Abstract**

What is discloses is a handling system (100), gripper device and a gripper (110) for a for forming and handling slugs of flat baked products (102) such as biscuits and cookies, said gripper being arranged for a mechanical type gripper as end-effector and being arranged to load a group of staggered products, form a slug from said group, and unload said slug into said outfeed transport device, said gripper comprising:
- a longitudinal retainer comprising elongated wall elements (112) extending along a longitudinal direction (L) of said gripper and configured for an open position for loading said group of staggered products, and a closed position for unloading said slug into a tray transported by a transport device, wherein said wall elements can be displaced as a jaw type gripper, moving in transverse direction, away from each other into said open position and towards each other into said closed position;
- a holding element (115), disposed at a first longitudinal end of said retainer, and configured for an open position for loading said group of staggered products, and a closed position for scooping under the first product of the group;
- a pushing element (113), disposed at a second, longitudinal end of said retainer, opposite of said first end, and configured for displacement of said pushing element in longitudinal direction into said retainer for compacting said group of staggered products into a slug.

## Description

The present invention relates in general to a gripper for a handling device.

More in particular, the present invention relates a gripper for a handling device which is arranged for forming slugs of flat baked products such as biscuits and cookies, wherein the flat baked products are infeed by loading the flat baked products individually from a conveyor means at an input of the handling device, and outfeed by unloading the slugs into a conveyor means of a packing device at an output of the handling device, wherein the slugs are defined as roll of on-edge oriented flat baked products.

The handling of flat baked products such as biscuits and cookies typically involves transporting the products from an infeed to an outfeed, e.g. from an oven or subsequent cooling conveyer towards a further handling device or directly into a packing device.

During the transport, the orientation of the individual products, the pattern or distribution of the products and the grouping typically requires modification. For example, biscuits may arrive from the oven in a random pattern of individual biscuits, or random disorderly pattern, but may also arrive in a bulk in which some of the biscuits partly or fully overlap each other. Eventually these need to be organized into piles, rolls, slugs or other types of formations, or even in combinations thereof in which for example piles are combined with rolls or in which several rolls or piles are packed by a single foil wrap.

A particular type of packing with a packing device is known as slug packing in which a slug of flat baked products such as biscuits and cookies is formed and in which the slug may be defined as a roll of a plurality of adjacent or abutting on-edge oriented flat baked products.

Slug packing or also known as slug wrapping is a typical way of packing biscuits or cookies or similar products on-edge, in which these products can have any shape from round, square to rectangular or other polygon shape.

Forming slugs from an individual supply of flat baked products at random or organised patterns involves several steps. The steps may include grouping of the individual products into a continuous stack, roll or roll-like orientation, compacting the stack or roll, separating them into slugs, which is also known as slug length separation, and transferring the slugs into the conveyor means of the packing device.

These steps have drawbacks as they may add handling time, lower the overall handling speed and increase the length of the production line and increase machine footprint.

Moreover, since some or most of these steps may even be performed by separate devices or separate stages within a single device, it involves transfer which adds complexity in respect of matching, synchronising and more in general smooth handover between the devices or the stages within the devices.

It is a goal of the present disclosure to provide for a handling device arranged for forming slugs of flat baked products such as biscuits and cookies, in which at least some of the above mentioned drawbacks are reduced or resolved.

According to a first aspect of the present disclosure, this goal is achieved with A handling system for forming and handling slugs of flat baked products such as biscuits and cookies from a feed of said flat baked products, said system comprising:
- an infeed transport device, such as a conveyor belt, arranged for infeed of said flat baked products;
- a slug gripper device, comprising at least one industrial robot having a mechanical type gripper as end-effector, and preferably a vision system, arranged for loading a group of products in a staggered orientation from said infeed transport device, and unloading said loaded group on to;
- an outfeed transport device, comprising a conveyor belt, chain conveyor or a flight bar, said outfeed transport device being arranged for outfeed of trays loaded with said slugs;
   wherein said gripper of said slug gripper device is arranged to load said group of staggered products, form a slug from said group, and unload said slug into said outfeed transport device, said gripper comprising:
   - a longitudinal retainer comprising elongated wall elements extending along a longitudinal direction of said gripper and configured for an open position for loading said group of staggered products, and a closed position for unloading said slug into a tray transported by said outfeed transport device, wherein said wall elements can be displaced as a jaw type gripper, moving in transverse direction, away from each other into said open position and towards each other into said closed position;
   - a holding element, disposed at alongitudinal end of said retainer, and configured for an open position for loading said group of staggered products, and a closed position for unloading said slug;
   - a pushing element, disposed at alongitudinal end of said retainer, and configured for displacement of said pushing element in longitudinal direction into said retainer for compacting said group of staggered products into a slug.

According to a second aspect of the present disclosure, this goal is achieved with a slug gripper device, arranged for a handling system according to the first aspect or examples thereof, for forming and handling slugs of flat baked products such as biscuits and cookies, said slug gripper device comprising at least one industrial robot having a mechanical type gripper as end-effector, and preferably a vision system, wherein said gripper of said slug gripper device is arranged to load a group of staggered products, form a slug from said group, and unload said slug into said outfeed transport device, said gripper comprising:
- a longitudinal retainer comprising elongated wall elements extending along a longitudinal direction of said gripper and configured for an open position for loading said group of staggered products, and a closed position for unloading said slug into a tray transported by a transport device, wherein said wall elements can be displaced as a jaw type gripper, moving in transverse direction are moved away from each other into said open position and towards each other into said closed position;
- a holding element, disposed at a longitudinal end of said retainer, and configured for an open position for loading said group of staggered products, and a closed position for unloading said slug;
- a pushing element, disposed at a longitudinal end of said retainer, and configured for displacement of said pushing element in longitudinal direction into said retainer for compacting said group of staggered products into a slug.

According to a third aspect of the present disclosure, this goal is achieved with a gripper for a device according to the second aspect or an example thereof, of a system according to the first aspect or examples thereof, for forming and handling slugs of flat baked products such as biscuits and cookies, said gripper being arranged for a mechanical type gripper as end-effector and being arranged to load a group of staggered products, form a slug from said group, and unload said slug into said outfeed transport device, said gripper comprising:
- a longitudinal retainer comprising elongated wall elements extending along a longitudinal direction of said gripper and configured for an open position for loading said group of staggered products, and a closed position for unloading said slug into a tray transported by a transport device, wherein said wall elements can be displaced as a jaw type gripper, moving in transverse direction are moved away from each other into said open position and towards each other into said closed position;
- a holding element, disposed at a longitudinal end of said retainer, and configured for an open position for loading said group of staggered products, and a closed position for unloading said slug;
- a pushing element, disposed at a longitudinal end of said retainer, , and configured for displacement of said pushing element in longitudinal direction into said retainer for compacting said group of staggered products into a slug.

The present disclosure relates in a first aspect to a handling system, in a second aspect to a slug gripper device of such a handling system, and in a third aspect to a gripper for such a slug gripper device.

The handling system, device and gripper are arranged to form slugs. In the context of packaging baked products, such as cookies, biscuits, crackers, or the like, a "slug" refers to a specific arrangement or grouping of individual items that are tightly packed together. This grouping is designed to facilitate efficient and automated packaging processes, particularly with machines like flow or foil wrappers. The tightly packed arrangement of the baked goods in the form of a slug allows for streamlined packaging, ensuring that the products can be easily and uniformly wrapped by the packaging machinery. Often, these slugs are then placed in trays or other containers for further protection and organisation during transportation and display. This method of packaging is commonly employed in large-scale production to enhance efficiency and maintain the integrity of the baked products throughout the packaging and distribution stages.

The slug is formed by grouping several, for example 2, 4, 8, 16, 32 or any number of individual products in a same, aligned and consistent orientation. The products are packed close to each other and placed with the large flat surfaces abutting each other. The products and thus the slug rest on the perimeter edge. Hence, the slug may be defined as a roll of cookies, or simply cookie roll.

It is known to use a slug gripper device to load the gripper of the device with individual products, one by one, by forming stacks of products within the gripper and when a sufficient number of products is loaded into the gripper, the gripper will be manipulated from a vertical to a horizontal orientation and subsequently unloaded into a tray for further handling and/or packaging by for example a flow wrapper.

With the disclosed handling system, slug gripper device and gripper, an alternative is provided wherein the products aren't loaded one by one into the gripper, but wherein the gripper loads a preformed group of products into the gripper and wherein the final formation of the slug is formed within the gripper itself.

Once the slugs are formed, they can be placed into a container or tray or similar holder or packaging equipment, in which they can be packed, for example and preferably by wrapping. In view of the present disclosure, slug wrapping refers to the packing by a packing device of slugs of flat baked products. Slug wrapping requires a way of volumetric loading, manipulating and portioning of stacked flat baked products.

Flat baked products, in view of the present disclosure, are thus defined as cookies, biscuits, crackers or similar baked products which have a substantially flat orientation and may have a round, square, rectangular or polygon shape. Throughout the present disclosure such flat baked products may generally be referred to, in short, as products. The slugs are formed for a group or a stack comprised of a plurality of products which are oriented on-edge, meaning that the flat surface of the product is in a vertical orientation.

Typically, these products may arrive from the oven or oven stations in a horizontal orientation in which the flat surface of the products rests on a conveyor belt. The products arrive downstream of the oven typically in a random pattern in which the individual products preferably are spaced apart but may also abut or even partly or fully overlap.

To form slugs from these products the volumetric handling devices should manipulate the orientation of the products to bring the products from a horizontal into a vertical orientation, manipulate the location by transporting it from the oven or oven station towards the packing device or packing station, and separate a continuous stack of products into slugs.

As mentioned in the background section, known slug formation and handling may involve several steps which have several drawbacks, which may increase complexity of the configuration of the individual devices, machines and gripper and may also increase complexity as to the synchronisation of all components in respect to each other.

Typical slug formation and handling may be performed by guide bars and conveyor belts in which a continuous flow of individual products are combined into a continuous flow of stacked or staggered products which are oriented vertically and oriented on-edge, as explained above. The continuous flow of stacked products may be considered a continuous slug of products, which then can be separated by a slug separation station in which predefined lengths of products are segregated or segmented into separate slugs. The slugs are then loaded into a tray or container for packaging.

It is known to use an industrial robot for at least some of these steps, e.g. for the loading, and for forming a single slug from a random supply of individual products.

The present system however provides an alternative wherein at least some steps are integrated and performed by the gripper. Such combination or integration of steps has advantages over conventional formation and loading and may have certain application specific benefits over the known slug gripper device as available from the applicant of the present invention.

The system, device and gripper according to the present disclosure is thus arranged for forming and handling slugs of flat baked products such as biscuits and cookies from a feed of said flat baked products, and infeed in a random disorderly pattern.

The core element of the system and device is the gripper, which is arranged to load the group of staggered products, hence, when the individual products are already combined into a group of products having a staggered orientation. The group consists of a single row of products which are partly on top of each other. Hence, in the context of the present disclosure, the group is a single row of products with a staggered orientation reminiscent of roof tiles, which implies that the products are arranged in a linear fashion, aligning lengthwise, but with a partial overlap. The products are positioned so that a portion of each product extends over the one next to it, creating a stepped or layered effect similar to roof tiles. This arrangement combines a linear structure with a staggered placement.

The gripper thus loads the group of staggered products from an infeed and forms a slug out of it, before unloading the slug on an outfeed device, into for example a tray or container for further processing and for example eventually packaging by flow wrapping.

The gripper comprises a longitudinal retainer with elongated wall elements extending along a longitudinal direction of the gripper. The retainer is arranged to hold or retain a group of products and is configured to displace the wall element between an open position for loading the group, and a closed position for unloading the slug once it has been formed. The wall elements can thus be displaced and are configured as a jaw type gripper, wherein the wall element are moving in a transverse, outward direction, away from each other into the open position and towards each other into the closed position. Hence, the jaws open in a direction perpendicular to the longitudinal direction of the gripper and elongated wall elements. The wall elements thus pivot around a pivot axis which is parallel to the longitudinal direction of the gripper and the wall elements. Both wall element may share the same pivot axis, but may also have a separate pivot axis which are parallel to each other. As such, the element may hinge around a single axis or around two parallel axis which are parallel to the longitudinal direction of the wall element.

The gripper further comprises a holding element, or scoop. The scoop is disposed at a longitudinal end of the retainer, and configured for an open position for loading the group, and a closed position for unloading the slug. The holding element or scoop can thus in the closed position make sure that the products are prevented from falling out of the retainer and thus operates as a blocking element in that position. In the open position the element is moved away to allow the loading of the group. The element also functions as a scoop by being configured as a finger element having a flat or tapered free end which is arranged to be scooped under the first, leading or trailing product. The group of staggered products have the characteristic that the first product lies totally flat on the surface carrying the group, e.g. a conveyor belt type infeed transport device. For picking up the group, i.e. loading the group, this single product may be considered the most challenging to pick up as the remaining products are already at least partly oriented on-edge which eases the pickup by the jaws, i.e. wall elements of the retainer. The first (or trailing) flat product is however scooped by the holding element and in particular by the flat or tapered free end, which allows it to be manipulated under the first product, at least partly. The free end preferably has a tapered section in which, once the element is partially scooped under the first product, it at least partly lifts the first product and brings it from a horizontal orientation towards a vertical orientation.

Once all products of the group are at least partly on-edge and thus brought into an at least partly vertical orientation, the third element of the retainer, the pushing element, is activated. The pushing element, is also disposed at a longitudinal end of the retainer.

In one example the pushing element is disposed at the same longitudinal end of the retainer as the holding element, whereas in an another example, it is disposed at a further or second longitudinal end of the retainer opposite of the first end where the holding element is located.

Hence, the holding element and the pushing element may be located at the same longitudinal end of the retainer or at opposite ends thereof. In such example, the retainer may comprise an additional element static stop element disposed at the end opposite of the pushing element and holding element.

Throughout the description, the invention is explained by way of reference to and by way of example of the holding element and pushing element to be positioned at opposite ends of the retainer. However, as explained above, this is merely an example and the skilled person will appreciate that this examples does not limit the scope of protection of the invention. Starting from the description, the skilled person is able to conceive various embodiments covering both the pushing and holding (scoping element) to be disposed at the same or opposite sides of the retainer, both falling within the inventive concept and scope of protection of the present invention.

Both elements may be integrated into one single element which in a first stage scoops under the first (leading) flat laying product, and in a second stage, pushes into the retainer by which the group of staggered products is compacted into a slug.

The holding element and pushing element however are preferably separate elements having separate functions, wherein the holding element scoops under the first flat laying product, and the pushing element pushes the group of staggered products into each other, such that they are compacted into a slug.

The wall elements are closed, i.e. the jaws of the retainer are at least partly closed such that the products are blocked from moving in a direction transverse to the longitudinal direction, i.e. the lateral clearance is restricted. When the wall elements are at least partly closed or moved towards each other, and the holding element scoops the first product to bring it into at least partly vertical orientation, the pushing element is activated to push for example a rod or bar into retainer by which the group of staggered products is compacted into a slug.

In an example, the wall elements may be comprised of two separate elements (similar to the element which scoops and the element which compacts). One element may be a scoping wall element, which closes toward the products in a direction transverse to the longitudinal direction, i.e. its lateral clearance is restricted, and scoops under the products in lateral direction. The other element may be compacting wall element which, after the scoping wall element has scoped under the products to increase clearance from the surface the products are resting on (e.g. the conveyor), pushes in lateral direction into the products to compact and hold the products in position.

In another example, the wall elements are configurated as a jaw-like gripper having two opposite wall elements which hinge around a pivot axis which is parallel to the longitudinal direction of the wall element and the products.

Once the slug is formed the gripper may be brought toward the outfeed and unloaded, e.g. in a tray disposed on a conveyor belt or flight bar of the outfeed.

The gripper according to the present disclosure has the advantage that its configuration eases the changeover between different setups of slugs or slug configurations, e.g. increasing or decreasing the number of individual products in a slug is easier with the proposed gripper. The retainer configuration may further be arranged to process different shapes, dimensions or tolerances of the products, without the need for equipping the robot with a different dedicated gripper, as is currently common.

The gripper may be replaceable and interchangeable with other grippers, which allows to have different grippers for different shapes and dimensions of products, e.g. a gripper dedicated to rectangular biscuits, a gripper dedicated to circular shapes biscuits, or a gripper for square shaped ones, etc.

Forming the slug in the gripper before unloading it as a slug into the conveyor or the like of the packing device or outfeed transport device, is more efficient, versatile, and less complex through combining several steps such that they can be performed by a single robot with a single gripper.

The gripper requires preformation of the group, meaning that the gripper assumes that the group of products are already staggered into such a staggered formation which allows the gripper to not only pick and place the group but also form a compact slug out of it.

To this end, the present disclosure also in an example, provides several a formation devices. The slug gripper with the disclosed gripper, together with the formation device and an infeed and outfeed device are comprised in the handling system.

The formation device comprises either mechanical means such as staggered conveyors to form a staggered group of products from an individual infeed, or may comprise guide elements such as formation plates which guide the individual products into a staggered group, either with a declining formation place and thereby by gravitational force, and/or by a actuator which manipulates the products and moves them into the staggered group. The formation device may however in addition or alternatively comprise one or several industrial robots. These robots may be equipped with a vision system, which enables pick and place of products which are fed in random, non-organised manner, or unstructured patterns. The vision system comprises a camera or other detection system which determines the exact position of each product and selects which products are to be combined in a single group. Then the gripper of the robot picks one of the products and places it in a staggered, roof tile like manner, on top of a first product of the group. This is repeated until sufficient products are staggered. To this end, the robot may have a suction cup type vacuum gripper as end-effector, but may also have a different type of gripper like a mechanical, finger type of gripper, although the vacuum cup is preferred, for not requiring a certain spacing in the circumference of the product to allow the fingers to grip the product.

The system comprises besides the formation device and the slug gripper device, also an infeed and an outfeed.

The infeed transport device is arranged to feed the flat baked products towards the formation device which may be integrated into the infeed transport device, e.g. by the formation robot to be placed alongside or above the conveyor of the infeed device. The infeed device may comprise a transport means such as a conveyor, which is arranged for and provides the products in a random disorderly pattern.
The outfeed transport device is the device in which the slugs are unloaded. The outfeed may be configured to transport trays and may comprise a tray denester for singulating or dispensing single trays onto a conveyor like transport, e.g. a conveyor belt but preferably a chain conveyor or flight bar in which positions and mutual spacings of the trays are fixed. The robot of the slug gripper device is then synchronised to outfeed such that it unloads the slugs in the trays in an accurate and timely manner.

In an example, the holding element is disposed at a first longitudinal end of said retainer, and configured for an open position for loading said group of staggered products, and a closed position for unloading said slug, and configured to pivot around a pivot axis perpendicular to a longitudinal axis of the wall elements.

In this example, the holding element is positioned at one end of the retainer and is designed to pivot around an axis that is perpendicular to the longitudinal axis of the wall elements. This configuration allows the holding element to swing open for loading the group of staggered products and swing closed for unloading the formed slug. The technical effect of this configuration is that it provides a controlled and efficient mechanism for handling the products. The pivoting motion of the holding element facilitates precise positioning and movement of the products, which can enhance the reliability and speed of the handling process. This can be particularly beneficial in high-speed production environments such as the present, where efficiency and accuracy are critical. Furthermore, the perpendicular arrangement of the pivot axis relative to the longitudinal axis of the wall elements ensures that the opening and closing motion of the holding element is aligned with the direction of product movement, which can help to prevent misalignment or displacement of the products during the handling process.

In an example, the holding element is configured as a scoop, and wherein said scoop is disposed at said first longitudinal end of the retainer.

In this example, the holding element of the slug gripper device is specifically configured as a scoop, and it is positioned at the first longitudinal end of the retainer. This configuration enhances the loading process by allowing the gripper to efficiently scoop up the preformed group of staggered products. The effect of this configuration is an improved and more precise loading mechanism. The scoop design ensures a secure and effective grip on the products, facilitating the cohesive formation of the slug within the gripper, and is able to scoop under the first product in an easy manner. This not only streamlines the handling process but also contributes to the overall efficiency and accuracy of the system, as the gripper can reliably pick up and hold the group of staggered products for subsequent processing.

In an example, the holding element comprises a flat or tapered free end which is arranged to be scooped under a first product of said group of staggered products upon loading said group into said retainer for at least partly lifting said first product and brings it from a horizontal orientation towards an at least substantial vertical orientation.

This example introduces a specific configuration for the holding element of the slug gripper device. In this case, the holding element comprises a flat or tapered free end positioned to be scooped under the first product of the group of staggered products during the loading process. The purpose of this design is to not only secure the products within the gripper but also to facilitate a controlled lifting action. The effect of this configuration is an enhanced loading mechanism that not only grips the products securely but also lifts the first product from a horizontal orientation to a substantial vertical orientation. This lifting action contributes to the precise arrangement of the products within the gripper, promoting a more orderly and controlled formation of the slug. It ensures that the gripper can handle the products with care and precision, ultimately leading to improved efficiency in the slug formation process.

In an example, the at least one industrial robot of said slug gripper device comprises a delta robot.

In an example, the at least one industrial robot of said formation device comprises a delta robot.

Any one or more of the industrial robots of the slug gripper device and/or formation device may comprise a delta robot, or a scara robot, or an articulated robot.

In an example, the system comprises a controller, wherein said control is electrically connected said slug gripper device, and comprising a memory for storing a group loading program, wherein said program is arranged for controlling said gripper of said slug gripper device to perform the steps of 1) manipulate said gripper towards an a loading position 2) load a group of staggered products, 3) form a slug from said group, 4) manipulate said gripper towards an uploading position, and 5) unload said slug into said outfeed transport device.

In an example, the steps 3) and 4) are performed at least partly simultaneously.

In an example, the step 2) comprises 2a) aligning gripper with the group of products to be loaded, 2b) manipulating said wall elements into an open position, 2c) lowering said retainer over said group 2d) manipulating said holding element to a closed position, thereby scooping under a first products of said group, 2e) manipulating said wall elements into a partially closed position to limit lateral movement of the products of said group 2f) ,manipulate said pushing element in longitudinal direction into said retainer for compacting said group of staggered products into a slug 2g) manipulating said wall elements into a fully closed position to limit lateral movement of the products of said group

The controller of the may be equipped with a control unit such as a microprocessor with a memory for storing a program routine to load the group of products, form the slug from the group of products and unload the slug. The program routine may be arranged such that all steps are performed sequentially, or at least some, such as the movement toward the unloading position and the formation, may be done simultaneously, or at least partly simultaneously.

In an example, the formation device comprises an industrial robot having a suction cup type vacuum gripper as end-effector, a vision system, and a conveyor means, said conveyor means being arranged for transporting said groups of staggered products, and wherein said conveyor means are comprised of cam elements, said cam elements being arranged to receive a first product of said group of staggered products for maintaining said first product in an inclined manner, and wherein said cam elements are preferably placed in groups of two elements, having a spacing in between configured for receiving said holding element of said gripper upon loading said group by said gripper and scooping said holding element under said first product of said group.

In this example, the formation device is equipped with an industrial robot featuring a suction cup-type vacuum gripper as the end-effector, complemented by a vision system and a specialized conveyor means. The conveyor means, designed for transporting the groups of staggered products, incorporates cam elements strategically placed for optimal handling. These cam elements serve a dual purpose: first, they receive the first product of the staggered group, maintaining it in an inclined manner for efficient processing; and second, the cam elements are arranged in pairs with a spacing configured to accommodate the holding element of the gripper during the loading phase. This configuration ensures that as the gripper loads the group, the holding element smoothly scoops under the first product of the staggered group, leveraging the inclination maintained by the cam elements. The effect of this integrated system is a seamless and precise loading process, facilitated by the synergistic interaction between the gripper's holding element and the specialized cam elements on the conveyor, leading to improved accuracy and efficiency in the formation of slugs from the staggered products.

In an example, the formation device comprises an industrial robot having a suction cup type vacuum gripper as end-effector, a vision system, and a conveyor means, said conveyor means being arranged for transporting said groups of staggered products, and wherein said conveyor means are configured for transporting cartridges, each being arranged to receive a group of staggered products, and wherein cartridges are preferably configured for receiving said holding element of said gripper upon loading said group by said gripper and scooping said holding element under said first product of said group in a respective cartridge.

In this example, the formation device is equipped with an industrial robot featuring a suction cup-type vacuum gripper, a vision system, and a specialized conveyor means designed for handling groups of staggered products. The conveyor means, in this instance, is configured for transporting cartridges, with each cartridge specifically arranged to receive a group of staggered products. Notably, these cartridges are designed to facilitate the loading process by accommodating the holding element of the gripper. As the gripper loads the group, the holding element smoothly engages with the respective cartridge, allowing it to scoop under the first product of the staggered group. This configuration enhances the precision and stability of the loading process, ensuring that the gripper efficiently interacts with the cartridges to form slugs. The technical effect of this system lies in the seamless integration of the gripper with the specialized cartridges, contributing to enhanced accuracy and efficiency in the overall formation of slugs from the staggered products.

In another aspect of the present disclosure, there is provided a group formation device, arranged for a handling system according to the first aspect, wherein the group formation device is configured to form groups of flat baked products prior to handling by the slug gripper device. The formation of these groups is beneficial to enable the slug gripper device to efficiently load a predefined number of products in a staggered orientation and subsequently compact them into a slug. The group formation device may be configured to receive products in a random disorderly pattern or in a continuous staggered manner and to process these into distinct groups of a predefined number of products.

According to a first example of the group formation device it comprises an industrial robot, preferably a delta robot, which is arranged as a pick-and-place unit. This configuration is particularly suitable when the products arrive at the infeed transport device in a random disorderly pattern, without any predefined structure or orientation. The delta robot is equipped with a vision system to detect the individual positions of the products and determine an optimal sequence for forming groups. The robot picks up individual products and places them in a predefined staggered manner onto the infeed transport device, thereby creating the groups of staggered products. The formation process involves sequentially stacking each product in a partially overlapping fashion with the preceding product, such that a consistent shingled or roof-tile-like arrangement is obtained. Once a group of a predefined number of products is completed, the formation device initiates a new group and repeats the process. This method enables flexible handling of various product shapes and sizes and allows adaptation to different production line configurations.

According to a second example, the group formation device is configured as a separation device designed to process a continuous flow of flat baked products that are already arriving in a staggered or shingled orientation. Rather than picking and placing individual products, the separation device extracts discrete groups from the continuous flow. This can be achieved by mechanical or robotic stop means that intermittently interrupt the movement of specific products. In particular, a stop means may be arranged to selectively hold back every n-th product in the flow for a predefined short duration, causing a gap between the held product and its preceding product. As a result, the following products naturally compress into a more compacted staggered formation due to the forward momentum of the production line. Once the predefined number of products is grouped, the stop means releases the held-back product, allowing the group to proceed downstream toward the slug gripper device. Once the formation of this group is completed, the formation device initiates a new group and repeats the process This method ensures efficient and high-speed formation of product groups without requiring individual pick-and-place handling.

According to a further example, the separation device comprises an industrial robot that actively interacts with the product flow by momentarily obstructing individual products at controlled intervals. Positioned above the conveyor, the robot is programmed to make brief contact with every n-th product, momentarily halting its forward motion. This action creates a space between the obstructed product and its preceding product while also causing subsequent products to compact slightly due to the ongoing movement of the conveyor. The robot may employ a mechanical contact element, a soft pad, or an air jet system to achieve controlled product separation without causing damage. The process can be dynamically adjusted based on real-time data from vision sensors to accommodate variations in product positioning, speed, or line conditions. This configuration provides increased flexibility, allowing precise group formation in high-speed production environments.

In another example, the group formation device may be equipped with multiple stop means arranged in a sequential manner, enabling finer control over the separation process. For instance, the first stop means may create an initial gap between groups, while a second stop means may apply a secondary compaction step to refine the staggered orientation before the groups reach the slug gripper device. Alternatively, a combination of mechanical separators and robotic interventions may be employed, wherein an initial mechanical stop means coarsely defines the groups, and a robot subsequently refines the staggered arrangement by selectively repositioning individual products. This hybrid approach enhances the precision of the group formation process and ensures that the slug gripper device receives consistently structured product groups.

Hence, the group formation device, whether implemented as a pick-and-place robot, a separation device with stop means, an overhead robot for controlled product retention, or a hybrid combination of these methods, provides a beneficial additional step to the production process, upstream in the handling system. By ensuring that the slug gripper device receives well-formed product groups, these formation techniques optimize the efficiency, reliability, and adaptability of the overall system, allowing seamless integration into high-speed production lines for flat baked products.

In an aspect, there is provided, a group formation device arranged for a handling system according to the first aspect, wherein the group formation device is configured to form groups of flat baked products from an infeed transport device, the group formation device comprising:
a formation mechanism configured to arrange individual flat baked products into groups of a predefined number;
an output mechanism configured to transfer said groups in a staggered orientation to an infeed transport device of a slug gripper device.

In another example, said formation mechanism comprises an industrial robot, preferably a delta robot, equipped with a vision system, the industrial robot being arranged to pick and place individual products from a random disorderly pattern onto said infeed transport device in a staggered manner to form said groups.

In another example, said formation mechanism comprises a separation device arranged to separate a continuous flow of staggered products into discrete groups by selectively holding back every n-th product to create a spacing between groups.

In another example, said separation device comprises a stop means configured to selectively abut against said n-th product for a predefined duration, thereby creating a separation between successive groups of products.

In another example, said separation device comprises an industrial robot positioned above the infeed transport device and arranged to momentarily obstruct the forward motion of individual products at controlled intervals.

In another example, said industrial robot comprises a mechanical contact element, a soft pad, or an air jet system to achieve controlled product separation without causing damage to said products.

In another example, said formation mechanism comprises multiple stop means arranged in sequence to refine the staggered orientation and apply a secondary compaction step before the groups reach the slug gripper device.

In another example, a combination of mechanical separators and robotic interventions is employed, wherein an initial mechanical stop means defines said groups, and a robotic system selectively refines the staggered arrangement by repositioning individual products.

In another example, the predefined number of products in each group is dynamically adjustable based on real-time data from vision sensors monitoring product flow.

The present disclosure will be explained in more detail below by means of examples of a device according to the present disclosure shown in the drawings, in which:
Fig. 1 shows a handling system with a gripper according to the present invention;
Fig. 2 shows a detail of a gripper according to the present invention;
Fig 3A, B, C show different views of a gripper according to the present invention in several operation states of loading products.

### Detailed Description:

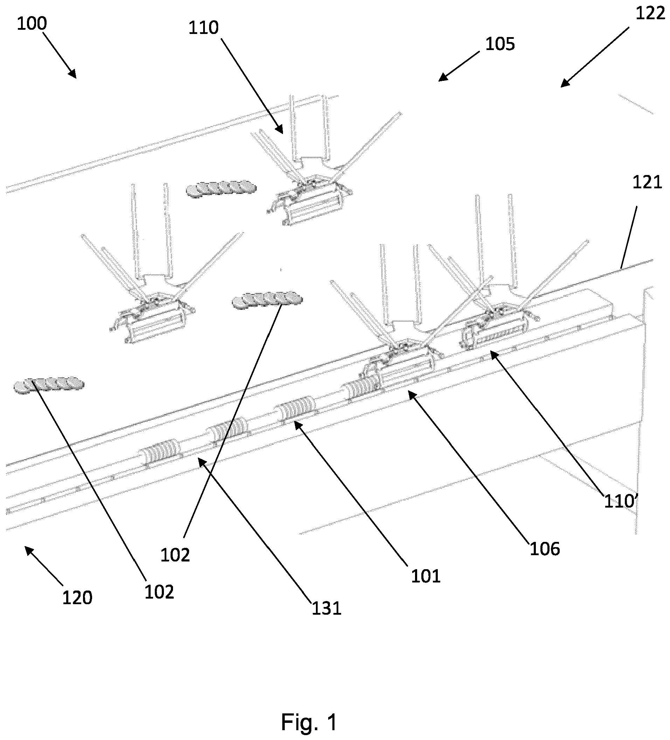

In Fig. 1 a handling system 100 is shown. Such a handling system may also be known as a device for volumetric loading. Such devices 100 are arranged for high speed handling of flat baked products 102 such as biscuits, cakes, cookies, sandwich cookies, etc. In the examples shown in the figures, the products are round products 102, already formed in groups, in a staggered or shingled orientation, but the handling system 100 and gripper 110 thereof are also arranged for other shapes of products such as square, rectangular or any polygon shaped baked product as long as the product 102 is at least substantially flat. Meaning that the product has two opposing sides which define a main surface which surface in itself is flat or at least substantially flat. These products arrive upstream the production line and may arrive directly from an oven, oven-line or oven-stage (not shown). As the products arrive directly from the oven, they may be relatively unsorted, randomly arranged on the conveyor without any previous handling being performed to control the position of the products.

From the oven the products 102 are transported by a conveyor 121 from the conveyor means 121 of the handling system 110. The conveyor may be an integral part of the handling device 110, but may also be a separate conveyor, or form part of a device upstream of the product line such as a outfeed of the backing oven or cooling thereof.

The products 102 are transported by the conveyer from an input side at the infeed towards an outfeed downstream of the product line, e.g. towards further devices for further handling. A such, the handling system 100 consists of an infeed transport device, such as the conveyor 121, a slug gripper device having the gripper 110 according to the present invention, and an outfeed transport device, such as the conveyor 120. A preferred example is that these products are outfeed directly into the conveyor means 131 of a packing device 120 as shown in the example of Fig. 1. It is however emphasized that these are merely examples and that the products may also be placed into another conveyor means or other type of transport device. Examples thereof are tray devices such as tray de-nesters in which trays are de-nested from a stack of trays and in which individual trays are placed on a conveyor or a flight bar such that the products 102 which are formed into slugs 101 by the handling device 110, may be placed directly into theses trays (not-shown).

As indicated, the handling system 100 and the slug gripper device 110 (also referred to as the handling device) forms slugs 101 from individual flat baked products 102. These slugs 102 are further downstream 120 packed by a foil or a wrapping, which is also known as slug wrapping, which is a typical way of packing biscuits or cookies or similar products on-edge as shown in Fig. 1. Typical for slugs 101 is that these are formed from several, e.g. 4, 5, 6, 7, 8, 10, 12, 14, 16, 18, 20 or more individual products 102 which products can have any shape from square to rectangular or other polygon shape, of the round form as shown in Fig. 1.

Forming slugs 101 from an individual 101 supply of flat baked products 101 may according to the invention be done by several steps. The products may be provided or infeed in a randomly, disorderly pattern, and then by a formation device or station or stage (not shown in the figures, but upstream of the stage shown in Fig. 1), or may be provided already by alternative means or process into a staggered group of products 102 as shown in Fig. 1. The products are thus, after the formation device or station formed into staggered groups 102 as shown in Fig. 1. The slug gripper devices 110, in the example shown there are 4 of these devices, but there may be any number between 1 and 32 or more, e.g. 1, 2, 3, 4, 5, 6, 8, 10, 12, 14, 16, 18 or 20 parallel operating slug gripper devices. The slug gripper devices comprise an industrial robot or robotic arm as seen partly in the figures. At the end of the robotic arm, a gripper is attached as an end-effector. The gripper is of a mechanical type. The system 100 also comprises a vision system (not shown) to determine where and at which orientation the groups of staggered products 102 are located on the conveyor 121 of the infeed transport device. The group of staggered products 102 are loaded by the gripper and unloaded into or onto an outfeed transport device 120, which comprises a conveyor belt, chain conveyor belt or flight bar or the like. Once the group of products is in the outfeed device 120, the group is already formed into its final form or orientation as slugs. Hence, the gripper of the slug gripper device 110 thus not only picks up a group of staggered products, but also forms a slug out of the group and unloads the slug into the outfeed device 120.

As mentioned, the products are provided in a staggered or shingled orientation as shown in the figure. Hence, the products may be provided upstream in a randomly disoriented pattern, or a partially oriented or structured pattern, and by a formation device formed into staggered groups. The group of products may be formed from individual products by either a mechanical means such as staggered conveyors, structural means such as guide bars, formation plates etc. or by an active means such as a robotic arm with pick and place capabilities, for example an industrial robot such as a delta robot which a mechanical gripper which picks up individual products, and places the product onto another product in a staggered manner, partially overlapping it. This may be repeated until a group of desired size is formed.

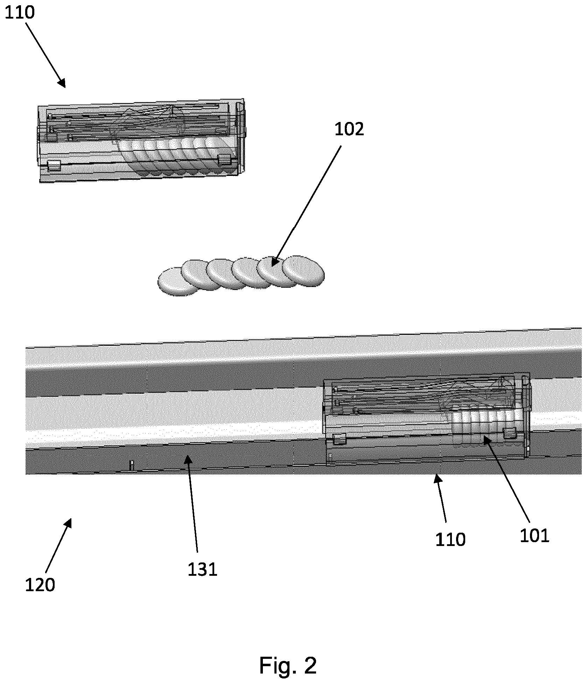

Fig. 2 shows more detail of the gripper 110 and the longitudinal retainer in which the products 102 are collected, retained or kept, and from which they are unloaded. The gripper consists of a longitudinal retainer with elongated wall elements and a holding element and a pushing element. The longitudinal retainer is arranged for loading the products as group, meaning that the retainer defines a retainer space being substantially cylindrically shaped and corresponding to the slug which is to be formed. Thus, in case of round products 102 as shown in the figures, the retainer is cylindrical, whereas if these are square or rectangular, the retainer may have corresponding shapes.

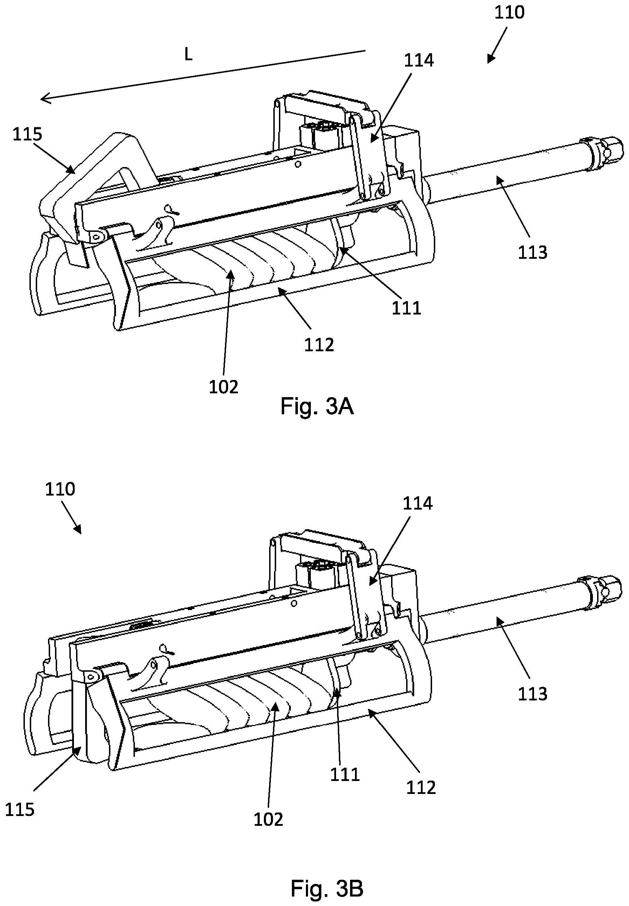

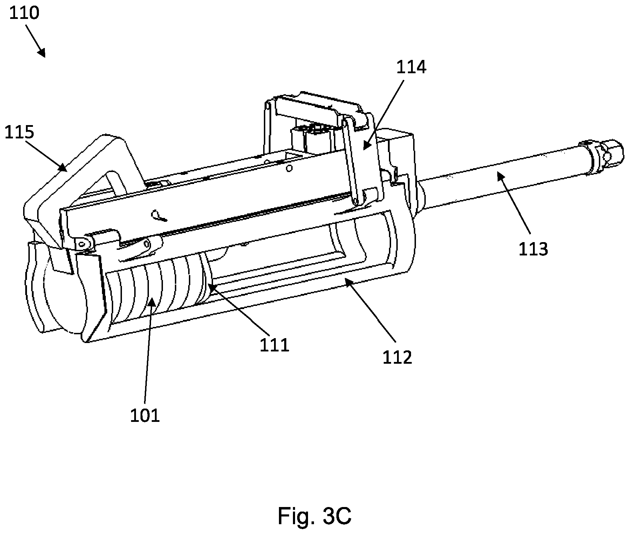

Fig. 3a, b, c show different operating states of the gripper. The retainer can be operated to be in a loading, retaining, formation and unloading state, which states may be performed sequentially, but more preferably in parallel or partially or fully overlapping manner. In the loading state, the retainer is arranged to open up in a vertical manner, meaning that the longitudinal axis L or direction of the retainer is perpendicular to a supporting surface 122 of the conveyor 121 which supplies the products 102 and thus on which the group of products rest in a vertical orientation or for each product individually at an angle, as shown in Fig. 1.

The retainer is upon loading open along the longitudinal axis L as the wall elements 112 or longitudinal walls 112 open as in a jaw like manner. As such, the gripper is arranged as a jaw type gripper to move away in a transverse direction, wherein the walls move away from each other.

The gripper also has a holding element 111 and pushing element 113 or timing belt, the pushing element may be comprised of an pneumatic or air cylinder to displace the holding element 111. The holding element is disposed at a first longitudinal end of the retainer and is configured for an open position (as shown in Fig. 3A) and a closed position (as shown in Fig. 3B). The holding element is not only arranged to hold the group of products in place, e.g. during movement of the group by the slug gripper device 110, but also to compact the group by scoping under the first product of the group in a scope like motion in transition between the open and closed position. This is shown in Fig. 3A wherein the holding element 115 is still open, and in Fig. 3B rotates and scopes under the first product of the group 102 to be able to put the first product in a vertical orientation as shown in Fig. 3C.

The gripper 110 on the opposite side of the holding element, is also provided with a pushing element 113, which in any disclosed embodiment may alternatively may also be a timing belt, which is arranged to displace the pushing element towards the group 102 and into the gripper along a longitudinal axis L to compact the group of staggered products into a slug as shown in Fig. 3c.

Now the gripper is loaded, the slug is formed it can be moved towards and above the unloading position of the conveyor means 131 at the output, where the gripper may be operated into an unloading state. In the unloading state, the gripper is controlled in such a way, by a controller thereof, that the elongated wall elements, which may be partly (as shown) or fully encompasses the wall of the retainer, open up or move away from the centre or central axis of the retainer. Hence, one or preferably both of the elongated wall elements may be displaced to open-up in a jaw-like manner. The gripper may thus have one but preferably has two displaceable elongated wall elements, similar to two jaws which open-up and displace relative from each other. Now the slug of products can be unloaded easily into the conveyor or flight bar for further handling, transport, or directly to the packing device for wrapping.

Based on the above description, a skilled person may provide modifications and additions to the method and arrangement disclosed, which modifications and additions are all comprised by the scope of the appended claims.

It will be clear that the intention of the above description is to shed light on the working of possible embodiments of the present invention, and not to limit the scope of protection of the invention. Starting from the description, a person skilled in the art is able to conceive of and use various embodiments that fall within the inventive concept and scope of protection of the present invention.

## Claims

1. A handling system for forming and handling slugs of flat baked products such as biscuits and cookies from a feed of said flat baked products, said system comprising:
- an infeed transport device, such as a conveyor belt, arranged for infeed of said flat baked products;
- a slug gripper device, comprising at least one industrial robot having a mechanical type gripper as end-effector, arranged for loading a group of products in a staggered orientation from said infeed transport device, and unloading said loaded group on to;
- an outfeed transport device, comprising a conveyor belt, chain conveyor or a flight bar, said outfeed transport device being arranged for outfeed of trays loaded with said slugs;
wherein said gripper of said slug gripper device is arranged to load said group of staggered products, form a slug from said group, and unload said slug into said outfeed transport device, said gripper comprising:
- a longitudinal retainer comprising elongated wall elements extending along a longitudinal direction of said gripper and configured for an open position for loading said group of staggered products, and a closed position for unloading said slug into a tray transported by said outfeed transport device, wherein said wall elements can be displaced as a jaw type gripper, moving in transverse direction, away from each other into said open position and towards each other into said closed position;
- a holding element, disposed at a longitudinal end of said retainer, and configured for an open position for loading said group of staggered products, and a closed position for unloading said slug;
- a pushing element, disposed at a longitudinal end of said retainer, , and configured for displacement of said pushing element in longitudinal direction into said retainer for compacting said group of staggered products into a slug.

2. The handling system according to claim 1, wherein said products are infeed in a random disorderly pattern, and said system comprising:
- a formation device, comprising at least one industrial robot having a suction cup type vacuum gripper as end-effector, and a vision system, arranged for picking products in a random disorderly pattern from said infeed transport device, and placing said picked products on further products on said infeed transport device in a staggered manner, forming a group of staggered products.

3. The handling system according to claim 1, wherein said products are infeed in a random disorderly pattern, and said system comprising:
- a formation device, comprising a mechanical formation unit arranged for receiving products from said infeed transport device in a random disorderly pattern, and outputting said products on said infeed transport device in a staggered manner, forming a group of staggered products.

4. The handling system according to any of the previous claims, wherein said holding element is disposed at a longitudinal end of said retainer, and configured for an open position for loading said group of staggered products, and a closed position for unloading said slug, and configured to pivot around a pivot axis perpendicular to a longitudinal axis of the wall elements.

5. The handling system according to any of the previous claims, wherein said holding element is configured as a scoop, and wherein said scoop is disposed at said longitudinal end of the retainer.

6. The handling system according to any of the previous claims, wherein said holding element comprises a flat or tapered free end which is arranged to be scooped under a leading or trailing product of said group of staggered products upon loading said group into said retainer for at least partly lifting said leading or trailing product and brings it from a horizontal orientation towards an at least substantial vertical orientation.

7. The handling system according to any of the previous claims, wherein said at least one industrial robot of said slug gripper device comprises a delta robot.

8. The handling system according to any of the previous claims, wherein said at least one industrial robot of said formation device comprises a delta robot.

9. The handling system according to any of the previous claims, wherein said system comprises a controller, wherein said control is electrically connected said slug gripper device, and comprising a memory for storing a group loading program, wherein said program is arranged for controlling said gripper of said slug gripper device to perform the steps of 1) manipulate said gripper towards an a loading position 2) load a group of staggered products, 3) form a slug from said group, 4) manipulate said gripper towards an uploading position, and 5) unload said slug into said outfeed transport device.

10. The handling system according to claim 9, wherein steps 3) and 4) are performed at least partly simultaneously.

11. The handling system according to claim 9, or 10, wherein step 2) comprises 2a) aligning gripper with the group of products to be loaded, 2b) manipulating said wall elements into an open position, 2c) lowering said retainer over said group 2d) manipulating said holding element to a closed position, thereby scooping under a leading or trailing products of said group, 2e) manipulating said wall elements into a partially closed position to limit lateral movement of the products of said group 2f) ,manipulate said pushing element in longitudinal direction into said retainer for compacting said group of staggered products into a slug 2g) manipulating said wall elements into a fully closed position to limit lateral movement of the products of said group

12. The handling system according to any of the previous claims, wherein said formation device, comprises an industrial robot having a suction cup type vacuum gripper as end-effector, a vision system, and a conveyor means, said conveyor means being arranged for transporting said groups of staggered products, and wherein said conveyor means are comprised of cam elements, said cam elements being arranged to receive a leading or trailing product of said group of staggered products for maintaining said leading or trailing product in an inclined manner, and wherein said cam elements are preferably placed in groups of two elements, having a spacing in between configured for receiving said holding element of said gripper upon loading said group by said gripper and scooping said holding element under said leading or trailing product of said group.

13. The handling system according to any of the previous claims, wherein said formation device, comprises an industrial robot having a suction cup type vacuum gripper as end-effector, a vision system, and a conveyor means, said conveyor means being arranged for transporting said groups of staggered products, and wherein said conveyor means are configured for transporting cartridges, each being arranged to receive a group of staggered products, and wherein cartridges are preferably configured for receiving said holding element of said gripper upon loading said group by said gripper and scooping said holding element under said leading or trailing product of said group in a respective cartridge.

14. A slug gripper device, arranged for a handling system according to any of the claims 1-13, for forming and handling slugs of flat baked products such as biscuits and cookies, said slug gripper device comprising at least one industrial robot having a mechanical type gripper as end-effector, wherein said gripper of said slug gripper device is arranged to load a group of staggered products, form a slug from said group, and unload said slug into said outfeed transport device, said gripper comprising:
- a longitudinal retainer comprising elongated wall elements extending along a longitudinal direction of said gripper and configured for an open position for loading said group of staggered products, and a closed position for unloading said slug into a tray transported by a transport device, wherein said wall elements can be displaced as a jaw type gripper, moving in transverse direction, away from each other into said open position and towards each other into said closed position;
- a holding element, disposed at a longitudinal end of said retainer, and configured for an open position for loading said group of staggered products, and a closed position for unloading said slug;
- a pushing element, disposed at a longitudinal end of said retainer, , and configured for displacement of said pushing element in longitudinal direction into said retainer for compacting said group of staggered products into a slug.

15. A gripper for a device according to claim 14 of a system according to any of the claims 1-13, for forming and handling slugs of flat baked products such as biscuits and cookies, said gripper being arranged for a mechanical type gripper as end-effector and being arranged to load a group of staggered products, form a slug from said group, and unload said slug into said outfeed transport device, said gripper comprising:
- a longitudinal retainer comprising elongated wall elements extending along a longitudinal direction of said gripper and configured for an open position for loading said group of staggered products, and a closed position for unloading said slug into a tray transported by a transport device, wherein said wall elements can be displaced as a jaw type gripper, moving in transverse direction, away from each other into said open position and towards each other into said closed position;
- a holding element, disposed at a longitudinal end of said retainer, and configured for an open position for loading said group of staggered products, and a closed position for unloading said slug;
- a pushing element, disposed at a longitudinal end of said retainer, , and configured for displacement of said pushing element in longitudinal direction into said retainer for compacting said group of staggered products into a slug.
